# FASCICULE DE BREVET EUROPEEN

(11) **EP 0 455 563 B1**
(45) Date de publication et mention de la délivrance du brevet: **28.06.1995**
(21) Numéro de dépôt: 91420126.4
(22) Date de dépôt: 15.04.1991
(51) Int. Cl.: H01R 25/16

(54) **Installation de distribution de l'électricité ayant des goulottes de logement de conducteurs et d'appareils électriques**
Elektrische Verteilungsanlage mit Aufnahmeeinrichtungen für Leitungen und elektrische Geräte
Electricity distribution installation with housing channels for wires and electrical apparatuses

(30) Priorité: 02.05.1990 FR 9005616
(43) Date de publication de la demande: 06.11.1991
(73) Titulaire: SCHNEIDER ELECTRIC SA, 92100 Boulogne Billancourt (FR)
(72) Inventeur: van Eeckhout, Jean, F-38050 Grenoble Cedex (FR)
(74) Mandataire: Ritzenthaler, Jacques

(56) Documents cités:
- FR-A- 2 637 131
- US-A- 3 566 194

## Description

L'invention est relative à une installation de distribution terminale comprenant une goulotte ou plinthe murale de section rectangulaire aplatie ayant des compartiments de logement d'appareils électriques de protection et/ou de commande et des compartiments de conducteurs de courant fort ou faible, auxquels les conducteurs desdits appareils sont raccordés pour alimenter des charges.

Les systèmes de distribution électrique par goulottes ou plinthes sont couramment utilisés, comme illustré dans le document FR-A-2 637 131, dans les installations tertiaires ou domestiques, et ils présentent l'avantage d'une adaptation aisée, par exemple par l'adjonction d'une prise de courant additionnelle ou d'un interrupteur en un emplacement quelconque. L'utilisation de plus en plus fréquente d'appareils télécommandés ou de détection dans de telles installations implique, soit une centralisation de ces appareils, notamment au tableau d'abonné ou dans un coffret de répartition, soit une incorporation de ces appareils dans la goulotte ou dans un boîtier adjacent de la goulotte. La première solution multiplie le nombre de conducteurs de la goulottte, car chaque charge télécommandée est reliée directement au tableau par des conducteurs individuels de puissance et/ou de commande. On évite cet inconvénient en répartissant les appareils aux emplacements appropriés, par exemple à proximité de la charge, mais les appareils standard à boîtier modulaire miniature sont en saillie de la goulotte et exposés à des dégradations. La présente invention part de la constatation que ces appareils modulaires miniatures ont tout comme la goulotte une forme aplatie et qu'en logeant ces appareils à plat dans la goulotte, leur saillie peut être notablement réduite ou même annulée.

Par mesure de commodité, de simplicité et de clareté, on appellera "appareil modulaire standard miniature", un appareil électrique comportant une partie active, logée dans un boîtier moulé parallélèpipédique à deux grandes faces latérales et quatre petites faces, dont deux petites faces opposées portent respectivement, l'une des moyens de fixation de l'appareil électrique, l'autre des moyens de commande et/ou de signalisation dudit appareil électrique.

D'après le document US-A-3,566,194, il est par ailleurs déja connu de disposer de disjoncteurs répondant à la définition "d'appareil modulaire standard miniature", dans un coffret, avec l'une des grandes faces latérales disposées parallèlement à la face arrière du coffret, les moyens de fixation, de commande et/ou de signalisation étant alors dans un plan perpendiculaire à la face arrière du coffret. Cette solution n'est pas acceptable pour une goulotte du fait des différences importantes en ce qui concerne les dimensions respectives.

L'installation selon l'invention est décrite dans la revendication 1.

Toutes les parties actives de l'appareil sont conservées et fabriquées sur la chaîne standard à un coût optimal, et seul l'emballage, en l'occurrence le boîtier est spécifique à cette application. Le surcoût est ainsi limité tout en conservant une gamme complète d'appareils, identique à celle des appareils modulaires standard, par exemple du type commercialement dénommé "MULTI 9".

Les crochets d'encliquetage sur le fond du boîtier standard sont inutiles pour un appareil disposé à plat dans la goulotte, et la fixation est réalisée par tout autre moyen approprié, par exemple par des crochets solidaires de la grande face latérale arrière, dans le cas d'une goulotte avec un rail à profil symétrique porté par le fond. Les commandes, en particulier la manette, et les signalisations en face avant de l'appareil standard sont reportées sur le couvercle de la goulotte, ou de préférence sur la grande face latérale avant de l'appareil. La manette basculante standard peut par exemple être remplacée par un bouton rotatif solidaire de l'axe de la manette et cette modification mineure permet une commande par l'avant de l'appareil.

La goulotte comporte un compartiment central en forme de canal recevant l'appareillage, ce canal central étant encadré de deux autres canaux, l'un pour les conducteurs de courant fort ou de puissance, et l'autre pour les courants faibles. Les bornes de connexion sont disposées sur les deux petites faces latérales perpendiculaires à la direction longitudinale de la goulotte, de façon à faciliter la connexion des conducteurs, réalisée de préférence avant l'insertion de l'appareil dans la goulotte. La profondeur des appareils interrupteurs unipolaire et neutre correspond sensiblement à celle de la goulotte et selon un développement de l'invention, la face avant du boîtier remplace une partie correspondante du couvercle de la goulotte. Les appareils logés dans la goulotte sont par exemple des télérupteurs, des contacteurs, ou des disjoncteurs à commande locale et/ou à distance, ou des appareils de commande tels que des relais, des détecteurs ou des indicateurs.

D'autres avantages et caractéristiques ressortiront plus clairement de la description qui va suivre, d'un mode de mise en oeuvre de l'invention donné à titre d'exemple non limitatif, et représenté aux dessins annexés dans lesquels:
- la figure 1 est une vue schématique en élévation d'une section de goulotte contenant un appareil réparti selon l'invention;
- la figure 2 est une coupe selon la ligne II-II de la figure 1;
- la figure 3 est une vue en perspective d'un appareil à boîtier standard, duquel est dérivé l'appareil réparti selon la figure 1;
- la figure 4 est une vue en perspective d'une goulotte avec un autre type d'appareil réparti, selon l'invention.

Sur les figures une goulotte ou plinthe 10 en matière plastique extrudée est constituée d'une gaine 11 ouverte vers l'avant, de section rectangulaire aplatie et d'un couvercle 12 en forme de plaque allongée. Le fond 13 de la goulotte 10 est fixé au mur et deux cloisons internes 14,15 longitudinales portées par le fond délimitent trois compartiments en forme de canaux, un compartiment central 16 et deux compartiments latéraux, l'un 17 supérieur et l'autre 18 inférieur. Les cloisons 14,15 laissent subsister un intervalle 19 d'introduction de conducteurs de courant faible 20 et de courant fort 21, respectivement logés dans les compartiments 17,18. Le fond 13 porte ou est configuré en rail 22 à profil symétrique de fixation par encliquetage. Le couvercle 12 s'encliquette sur les bords de la gaine 11 et dans le compartiment central 16 peut être logé l'appareillage usuel de l'installation, notamment des prises de courant ou interrupteurs (non représentés) raccordés aux conducteurs de puissance 21. De telles goulottes 10 sont bien connues et utilisées notamment dans les habitations ou le tertiaire pour distribuer l'énergie électrique par exemple monophasée.

La goulotte 10 comporte un appareil électrique 23 de protection et/ou de commande, par exemple un contacteur, télérupteur, disjoncteur, relais ou analogue, dénommé par la suite disjoncteur, ayant un boîtier moulé 24 parallélépipèdique rectangle aplati. Le boîtier 24 est introduit dans le compartiment central 16 avec l'une 25 de ses grandes faces latérales, fixée au fond de la goulotte 10 par des crochets 26 d'encliquetage sur le rail 22. La profondeur ou la petite dimension du boîtier 24 correspond sensiblement à celle de la goulotte 10 et cette dimension est dans le cas usuel d'un disjoncteur 23 unipolaire et neutre d'environ 18mm.

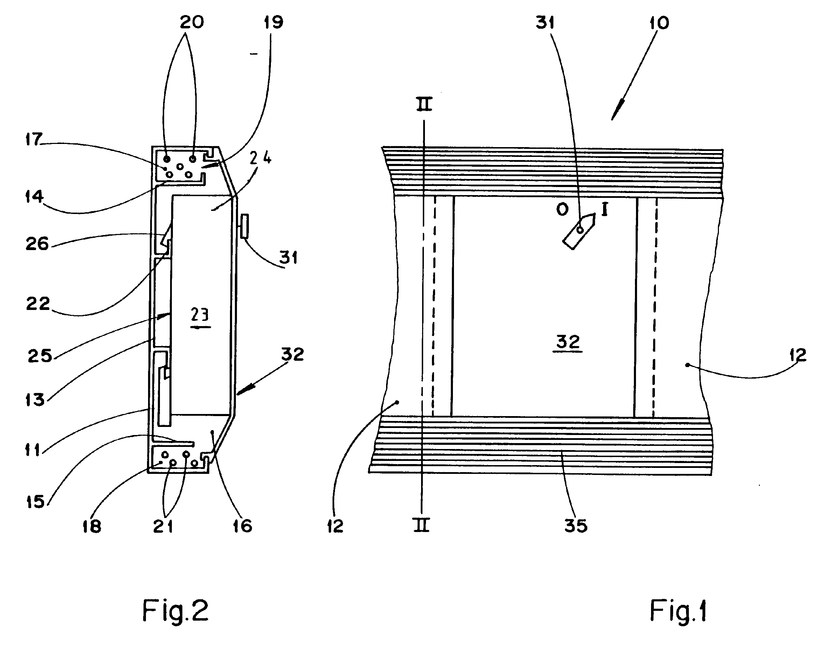

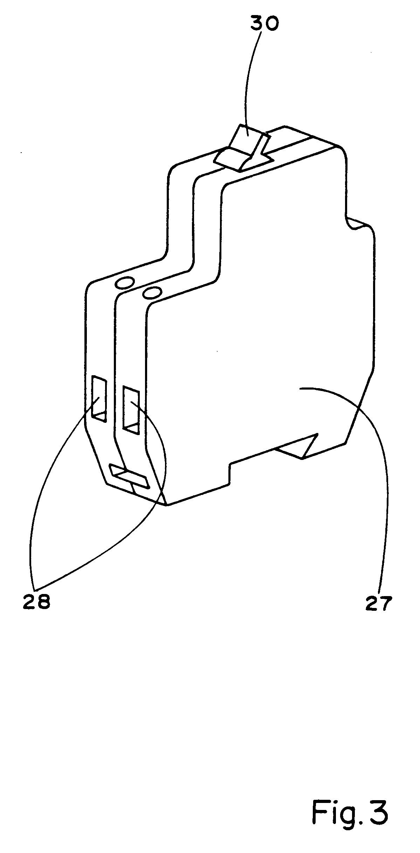

Le disjoncteur 23 est un disjoncteur standard modulaire miniature par exemple de la gamme dénommée commercialement MULTI 9, dont le boîtier 27, représenté à la figure 3, a été remplacé par un boîtier parallèlépipèdique 24 de même petite dimension. Toutes les autres parties constitutives du disjoncteur 23 sont conservées, notamment les bornes 28, disposées sur les deux petites faces latérales 29 qui, dans la goulotte 10, sont perpendiculaires à la direction longitudinale de la goulotte 10. Lorsque l'appareil 23, en l'occurrence un disjoncteur, comporte une manette 30 de commande manuelle, on peut prévoir une possibilité d'accès ou de manoeuvre à partir de la face avant de la goulotte ou, de la manière représentée sur les figures 1 et 2, enlever la manette 30 et remplacer celle-ci par un bouton rotatif 31, calé sur l'axe de la manette et en saillie de la face avant 32 du boîtier 24. L'absence de manette réduit l'encombrement en hauteur du boîtier 24 et facilite son logement dans des goulottes 10 de faible hauteur.

Le couvercle 12 de la goulotte 10 peut coiffer le boîtier 24 du disjoncteur 23, mais dans le mode de mise en oeuvre préférentiel, représenté sur les figures, la face avant 32 affleure et constitue une partie du couvercle. La continuité du couvercle 12 est assurée par un chevauchement des bords des couvercles adjacents et de redans 33 prévus sur le boîtier 24, et par des caches 35 coiffant les compartiments latéraux 17,18. La goulotte 10 et le boîtier 24 doivent être adaptés l'un à l'autre pour conserver une esthétique parfaite.

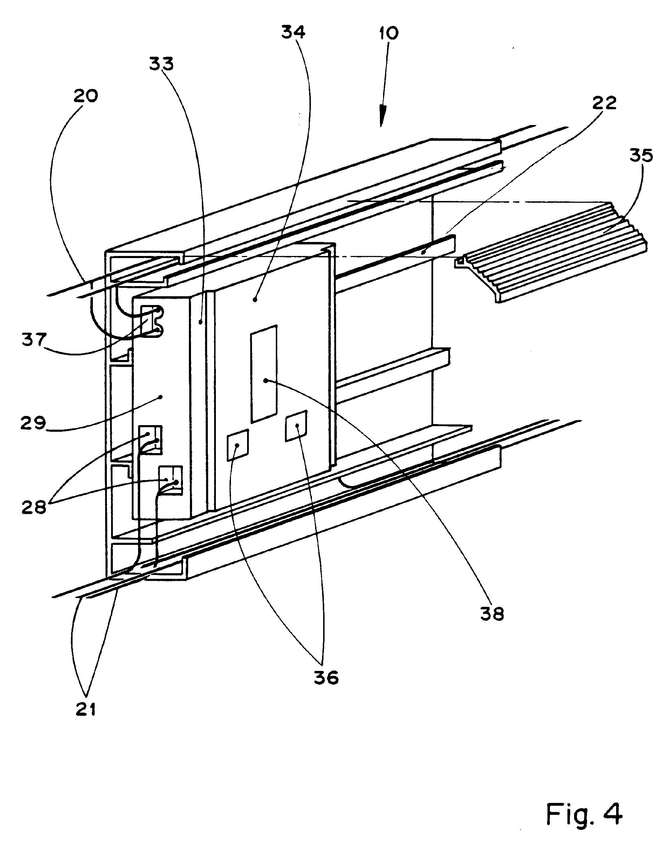

La figure 4 illustre un appareil d'un autre type, par exemple un thermostat 34, ayant deux boutons de réglage local 36, répartis sur la face avant du boîtier 24. Sur l'une des petites faces latérales sont disposées des bornes de commande 37 connectées aux conducteurs 20 de courant faible. Des voyants ou autres indicateurs 38 sont visibles sur la face avant. Ces adaptations sont faciles à réaliser et n'affectent pas la structure de l'appareil qui est celle de l'appareil standard.

La mise en oeuvre de l'invention ressort de l'exposé précédent:

A partir d'une gamme d'appareils miniatures étroits à fixation par encliquetage du fond étroit sur un rail à profil symétrique, on réalise une gamme d'appareils répartis dans des goulottes en remplaçant le boîtier original par un boîtier adapté à ces goulottes. Ces appareils adaptés sont logés à plat dans la goulotte, en reportant éventuellement les organes de commande et de visualisation sur la face avant. Le raccordement des conducteurs est de préférence réalisé avant l'insertion complète dans la goulotte de l'appareil. Ces appareils sont utilisables dans des goulottes n'ayant qu'un compartiment latéral de conducteurs ou à compartiment disposé dans le fond de la goulotte, et il est possible de prévoir des rehausses lorsque les dimensions de la goulotte sont trop grandes ou une saillie partielle dans le cas inverse. L'appareil peut également être logé dans une extension en forme de cadre latéral, associée ou appartenant à la goulotte de façon à limiter la section de la goulotte dans les zones démunies d'appareils, l'avantage d'une absence de saillie frontale étant conservé. Un cadre ou coffret latéral peut également être prévu pour le logement de plusieurs modules en un même emplacement de la goulotte.

L'invention n'est pas limitée à des appareils unipolaire et neutre, mais la taille de la goulotte doit correspondre à celle des appareils, et l'invention s'étend à toute variante de réalisation.

## Revendications

1. Installation de distribution terminale comprenant :
- une goulotte (10) ou plinthe murale de section rectangulaire aplatie ayant des compartiments (16) de logement d'appareils électriques (23) de protection et/ou de commande et des compartiments (17,18) de conducteurs (20,21) de courant fort ou faible, auxquels les conducteurs desdits appareils sont raccordés pour alimenter des charges ;
- au moins un appareil électrique (23) comportant une partie active identique à celle d'un appareil modulaire standard miniature, logée dans un boîtier moulé parallélèpipédique (24) à deux grandes faces latérales (25, 32) et quatre petites faces (29) ;
caractérisé par le fait que
- ledit appareil électrique (23) est logé dans le compartiment (16) correspondant de la goulotte (10) avec l'une (25) de ses grandes faces latérales adjacentes au fond (13) mural de la goulotte (10) ;
- que la profondeur de la goulotte (10) correspond sensiblement à la largeur des petites faces (29) du boîtier (24) pour éviter une saillie notable des appareils ;
- que ladite grand face latérale (25) adjacente audit fond (13) est pourvu de moyens de fixation (26) sur ladite goulotte (13) ; et
- que l'autre grande face latérale (32) porte les moyens de commande (31, 36) et/ou de signalisation (38) dudit appareil électrique.

2. Installation selon la revendication 1, caractérisée en ce que les moyens de commande comportent un bouton rotatif (31) disposé sur la grande face latérale avant (32), opposée au fond et que ledit bouton est calé sur l'axe de pivotement de ladite partie active.

3. Installation selon la revendication 1 ou 2, caractérisée en ce que le fond (13) de la goulotte (10) porte un rail (22) de fixation à profil symétrique et que la grande face latérale (25) du boîtier, adjacente audit fond (13), est dotée de crochets (26) d'encliquetage sur ledit rail.

4. Installation selon la revendication 1,2 ou 3, caractérisée en ce que les compartiments (16) de logement des appareils sont agencés en un canal central (16) encadré de deux canaux latéraux (17,18) formant les compartiments de conducteurs.

5. Installation selon la revendication 4, caractérisée en ce que l'un (18) des canaux latéraux reçoit les conducteurs de puissance (21) et que l'autre (17) reçoit les conducteurs de courant faible (20), notamment les conducteurs de commande ou de signalisation desdits appareils.

6. Installation selon l'une quelconque des revendications précédentes, caractérisée en ce que la grande face latérale avant (32), opposée au fond (25) de l'appareil, affleure avec les couvercles (12) adjacents de la goulotte (10) qui s'y raccordent avec chevauchement d'un redan (33).

7. Installation selon l'une quelconque des revendications précédentes, caractérisée en ce que les petites faces (29) portant les bornes de connexions (28,37) sont perpendiculaires à la direction longitudinale de la goulotte (10).

8. Installation selon l'une quelconque des revendications précédentes, caractérisée en ce que lesdits appareils (23) sont des appareils électriques interrupteurs en particulier, des contacteurs, télérupteurs, relais et disjoncteurs.

9. Installation selon l'une quelconque des revendications précédentes, caractérisée en ce qu'elle comporte un conducteur de phase et un conducteur de neutre et des appareils interrupteurs unipolaire et neutre.

10. Installation selon l'une quelconque des revendications précédentes, caractérisée en ce que les compartiments de logement des appareils électriques sont constitués par des extensions latérales en forme de cadres de la goulotte (10).

## Patentansprüche

1. Endverteileranlage mit
- einem Kabelkanal (10) oder einer Kabelrinne zur Wandmontage, der/die einen abgeflachten rechteckigen Querschnitt aufweist und Abteile (16) zur Aufnahme von elektrischen Schaltgeräten (23) für Schutz- und/oder Steuerfunktionen sowie Abteile (17, 18) zur Aufnahme von Leistungs- oder Steuerkabeln (20, 21) umfaßt, an die zur Einspeisung von Verbrauchern die Kabel der genannten Schaltgeräte angeschlossen sind,
- mindestens einem elektrischen Schaltgerät (23), dessen aktiver Teil dem eines modularen Standard-Kleinschaltgeräts entspricht und das in einem kastenförmigen Isolierstoffgehäuse (24) mit zwei breiten Seitenflächen (25, 32) und vier schmalen Seitenflächen (29) montiert ist,
dadurch gekennzeichnet, daß
- das genannte Schaltgerät (23) mit einer an den Boden (13) zur Wandbefestigung des Kabelkanals (10) grenzenden breiten Seitenfläche (25) in das entsprechende Abteil (16) des Kabelkanals (10) eingesetzt ist;
- die Tiefe des Kabelkanals (10) annähernd der Breite der schmalen Seitenflächen (29) des Gehäuses (24) entspricht, um einen nennenswerten Überstand der Schaltgeräte zu verhindern;
- die an den genannten Boden (13) angrenzende, genannte breite Seitenfläche (25) Mittel (26) zur Befestigung am genannten Kabelkanal (10) aufweist; und
- die andere breite Seitenfläche (32) Betätigungsorgane (31, 36) und/oder Anzeigeelemente (38) des genannten Schaltgeräts aufweist.

2. Anlage nach Anspruch 1, dadurch gekennzeichnet, daß die Betätigungsorgane einen auf der dem Boden abgewandten, vorderen breiten Seitenfläche (32) montierten Drehantrieb (31) umfassen, und daß der genannte Drehantrieb mit der Schwenkachse des genannten aktiven Teils gekuppelt ist.

3. Anlage nach Anspruch 1 oder 2, dadurch gekennzeichnet, daß der Boden (13) des Kabelkanals (10) eine symmetrische Profilschiene (22) trägt und daß die an den genannten Boden (13) angrenzende breite Seitenfläche (25) des Gehäuses Rasthaken (26) zur Aufschnappbefestigung auf der genannten Profilschiene aufweist.

4. Anlage nach Anspruch 1, 2 oder 3, dadurch gekennzeichnet, daß die Abteile (16) zur Aufnahme der Schaltgeräte als Mittelrinne (16) ausgebildet sind, die von zwei, die Abteile zur Aufnahme der Kabel bildenden seitlichen Außenrinnen (17, 18) umgeben ist.

5. Anlage nach Anspruch 4, dadurch gekennzeichnet, daß die eine Außenrinne (18) die Leistungskabel (21) und die andere Außenrinne (17) die Steuerkabel (20), insbesondere die Steuer- und Mieldeleitungen der genannten Schaltgeräte aufnimmt.

6. Anlage nach irgendeinem der vorhergehenden Ansprüche, dadurch gekennzeichnet, daß die dem Boden (25) des Schaltgeräts gegenüberliegende, vordere breite Seitenfläche (32) bündig mit den angrenzenden Abdeckungen (12) des Kabelkanals (10) abschließt, die überlappend in einen Absatz (33) dieser Seitenflächen eingepaßt sind.

7. Anlage nach irgendeinem der vorhergehenden Ansprüche, dadurch gekennzeichnet, daß die schmalen Seitenflächen (29), an denen die Anschlußklemmen (28, 37) angebracht sind, senkrecht zur Längsrichtung des Kabelkanals (10) verlaufen.

8. Anlage nach irgendeinem der vorhergehenden Ansprüche, dadurch gekennzeichnet, daß es sich bei den genannten Schaltgeräten (23) um unterbrechende Schaltgeräte, insbesondere um Schütze, Stromstoßrelais, Relais und Leistungsschalter handelt.

9. Anlage nach irgendeinem der vorhergehenden Ansprüche, dadurch gekennzeichnet, daß sie einen Phasenleiter und einen Neutralleiter sowie einpolige unterbrechende Schaltgeräte mit Neutralleiter umfaßt.

10. Anlage nach irgendeinem der vorhergehenden Ansprüche, dadurch gekennzeichnet, daß die Abteile zur Aufnahme der Schaltgeräte als rahmenförmige seitliche Erweiterungen des Kabelkanals (10) ausgeführt sind.

## Claims

1. A terminal distribution installation comprising :
- a wall trunking (10) or skirting board of flattened rectangular cross-section having compartments (16) for housing electrical protection and/or control equipment (23) and compartments (17, 18) for strong or weak current conductors (20, 21), to which the conductors of said equipment are connected to supply power to loads ;
- at least one electrical apparatus (23) comprising an active part identical to that of a standard miniature modular apparatus, housed in a parallelipipedic moulded case (24) with two large faces (25, 32) and four small faces (29) ;
characterized in that
- said electrical apparatus (23) is housed in the corresponding compartment (16) of the trunking (10) with one (25) of its large side faces adjacent to the wall-side back plate (13) of the trunking (10) ;
- that the depth of the trunking (10) corresponds about to the width of the small faces (29) of the case (24) in order to prevent a significant projection of the apparatus ;
- that said large side face (25) adjacent to said back plate (13) is provided with means for fixing (26) onto said trunking (10) ; and
- that the other large side face (32) bears control means (31, 36) and/or indication means (38) of said electrical apparatus.

2. The installation according to claim 1, characterized in that the control means comprise a rotary knob (31) located on the front large side face (32), opposite from the back plate and that said knob is keyed onto the pivoting spindle of said active part.

3. The installation according to claim 1 or 2, characterized in that the back plate (13) of the trunking (10) bears a symmetrical profile fixing rail (22) and that the large side face (25) of the case, adjacent to said back plate (13) is provided with hooks (26) for clipping onto said rail.

4. The installation according to claim 1, 2 or 3, characterized in that the compartments (16) for housing the equipment are arranged as a central channel (16) having on each side two lateral channels (17, 18) forming the conductor compartments.

5. The installation according to claim 4, characterized in that one (18) of the lateral channels receives the power conductors (21) and that the other (17) receives the weak current conductors (20), notably the control or indication conductors of said equipment.

6. The installation according to any one of the above claims, characterized in that the front large side face (32), opposite from the back plate (25) of the apparatus, is flush with the adjacent covers (12) of the trunking (10) which are joined thereto with overlap of a cheek (33).

7. The installation according to any one of the above claims, characterized in that the small faces (29) bearing the connection terminals (28, 37) are perpendicular to the longitudinal direction of the trunking (10).

8. The installation according to any one of the above claims, characterized in that said equipment (23) is electrical switchgear in particular contactors, remote-controlled switches, relays and circuit breakers.

9. The installation according to any one of the above claims, comprising a phase conductor and a neutral conductor and single-pole and neutral switchgear equipment.

10. The installation according to any one of the above claims, characterized in that the compartments housing the electrical equipment are formed by lateral extensions in the form of frames of the trunking (10).
